# FASCICULE DE BREVET EUROPEEN

(11) **EP 3 492 807 B1**
(45) Date de publication et mention de la délivrance du brevet: **05.04.2023**
(21) Numéro de dépôt: 18206105.1
(22) Date de dépôt: 14.11.2018
(51) Int. Cl.: F21S 43/239, F21S 43/14, F21S 43/236, F21S 43/237, F21S 43/241, F21S 43/249, F21S 43/243, F21S 43/27, F21S 43/40, F21S 43/50, F21S 43/20, F21S 41/365, F21V 8/00, F21S 41/24, F21S 41/147, F21S 41/148

(54) **DISPOSITIF D'ÉCLAIRAGE À GUIDE(S) DE LUMIÈRE POUR UN VÉHICULE**
BELEUCHTUNGSVORRICHTUNG MIT LICHTLEITER(N) FÜR EIN FAHRZEUG
LIGHTING DEVICE WITH LIGHT GUIDE(S) FOR A VEHICLE

(30) Priorité: 30.11.2017 FR 1761439
(43) Date de publication de la demande: 05.06.2019
(73) Titulaire: PSA Automobiles SA, 78300 Poissy (FR)
(72) Inventeur: VIDEIRA, FILIPE, 78140 VELIZY VILLACOUBLAY (FR)

(56) Documents cités:
- EP-A1- 3 453 947
- CN-U- 206 656 259
- DE-A1-102012 112 072
- DE-A1-102013 225 950
- FR-A1- 3 000 569
- FR-A1- 3 002 895
- FR-A1- 3 014 787
- FR-A1- 3 046 579
- JP-A- 2016 091 825

## Description

L'invention concerne les dispositifs d'éclairage qui équipent des véhicules et qui comprennent au moins un guide de lumière alimenté en photons par au moins une source de photons.

On entend ici par « dispositif d'éclairage » un dispositif lumineux pouvant assurer au moins une fonction photométrique d'éclairage ou de signalisation. On notera qu'un tel dispositif d'éclairage peut éventuellement être logé dans une cavité délimitée par un boîtier d'un bloc optique de véhicule, comme par exemple un feu arrière ou avant ou un phare ou projecteur avant.

Certains dispositifs d'éclairage de véhicule, généralement de type automobile, comprennent au moins un guide de lumière comprenant une partie centrale située entre une extrémité arrière, alimentée en photons par au moins une source de photons, et une extrémité avant, comportant une face avant délivrant des photons guidés par la partie centrale.

La source de photons peut être installée devant une (ou en amont d'une) face arrière de l'extrémité arrière orientée vers la face avant de l'extrémité avant, afin d'obtenir une introduction directe (ou dans l'axe de la partie centrale) qui permet d'optimiser le rendement. En variante, la source de photons peut être installée au-dessus ou au-dessous de l'extrémité arrière qui comprend alors une face arrière inclinée orientée vers la face avant de l'extrémité avant afin de réfléchir les photons vers cette dernière, ce qui permet de limiter l'encombrement (notamment transversal).

De tels agencements, qui sont fréquemment utilisés lorsque le guide de lumière est de type plat (ou « flat guide »), imposent que le guide de lumière présente une extension longitudinale importante afin que les photons aient le temps de se répartir de façon homogène avant d'atteindre la face avant. En outre, ils imposent l'utilisation d'un masque assez imposant du fait qu'il doit masquer l'intégralité du guide de lumière, excepté sa face avant, pour éviter que l'on aperçoive des « points chauds » correspondant à chaque source de photons et empêcher la sortie de photons parasites n'ayant pas pénétré dans l'extrémité arrière. Un tel masque empêche qu'une partie de la face supérieure de la partie centrale du guide de lumière soit apparente pour réaliser un effet lumineux, éventuellement lié au style.

On connait des documents DE102013225950A1 et FR3000569A1, de tels dispositifs d'éclairage. Le document FR3000569A1 divulgue un dispositif d'éclairage comportant un tel masque, conforme au préambule de la revendication 1.

L'invention a donc notamment pour but d'améliorer la situation en proposant un dispositif d'éclairage conforme à la partie caractérisante de la revendication 1.

Le dispositif d'éclairage selon l'invention peut comporter d'autres caractéristiques qui peuvent être prises séparément ou en combinaison, et notamment :
- la forme de l'extrémité arrière peut être définie par au moins une première face orientée vers la zone d'entrée et la source de photons, et une seconde face orientée vers la partie centrale en faisant un angle prédéfini par rapport à la direction générale prédéfinie ;
   > la surface externe de l'une au moins des première et seconde faces peut être agencée de manière à réfléchir les photons selon plusieurs directions différentes afin d'obtenir une répartition homogène des photons guidés sur la face avant de l'extrémité avant ;
- la zone d'entrée peut être située sur une face d'entrée participant à la définition de la forme et orientée vers la partie centrale. Dans ce cas, la source de photons est placée entre les extrémités arrière et avant ;
- en variante, la zone d'entrée peut être située sur une face d'entrée participant à la définition de la forme et orientée à l'opposé de la partie centrale. Dans ce cas, la source de photons est placée en amont de l'extrémité arrière ;
- son guide de lumière peut être de type plat.

L'invention propose également un bloc optique destiné à équiper un véhicule et comprenant un boîtier délimitant une cavité logeant au moins un dispositif d'éclairage du type de celui présenté ci-avant.

L'invention propose également un véhicule, éventuellement de type automobile, et comprenant au moins un dispositif d'éclairage du type de celui présenté ci-avant et/ou au moins un bloc optique du type de celui présenté ci-avant.

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), d'où le caractère apparemment discontinu de certaines lignes), sur lesquels :
- la figure 1 illustre schématiquement, dans une vue en perspective, les principaux éléments constituants un premier exemple de réalisation d'un dispositif d'éclairage selon l'invention, avant assemblage et avant installation dans un bloc optique d'un véhicule,
- la figure 2 illustre schématiquement, dans une vue en coupe, le dispositif d'éclairage de la figure 1, une fois ses principaux éléments assemblés, et
- la figure 3 illustre schématiquement, dans une vue en coupe, un second exemple de réalisation d'un dispositif d'éclairage selon l'invention, une fois ses principaux éléments assemblés.

L'invention a notamment pour but de proposer un dispositif d'éclairage DE destiné à équiper un véhicule et comprenant au moins un guide de lumière GL associé à au moins une source de photons SP.

Il est rappelé que l'on entend ici par « dispositif d'éclairage » un dispositif lumineux pouvant assurer au moins une fonction photométrique d'éclairage ou de signalisation au moyen d'au moins un guide de lumière et d'au moins une source de photons.

On considère dans ce qui suit, à titre d'exemple non limitatif, que le véhicule est de type automobile. Il s'agit, par exemple, d'une voiture. Mais l'invention n'est pas limitée à ce type de véhicule. En effet, elle concerne tout véhicule (terrestre, maritime (ou fluvial), ou aérien), dès lors qu'il doit comprendre au moins un dispositif d'éclairage.

Par ailleurs, on considère dans ce qui suit, à titre d'exemple non limitatif, que le dispositif d'éclairage DE est destiné à faire partie d'un bloc optique de véhicule. Mais il pourrait lui-même constituer un bloc optique. Dans ce cas, il doit comprendre un boîtier délimitant une cavité logeant au moins un guide de lumière et au moins une source de photons assurant au moins une fonction photométrique d'éclairage ou de signalisation.

De plus, on considère dans ce qui suit, à titre d'exemple non limitatif, que le bloc optique est un feu arrière. Mais il pourrait également s'agir d'un projecteur (ou phare) avant ou d'un feu avant.

A titre d'exemple illustratif le dispositif d'éclairage DE peut assurer une fonction photométrique de type feu de stop.

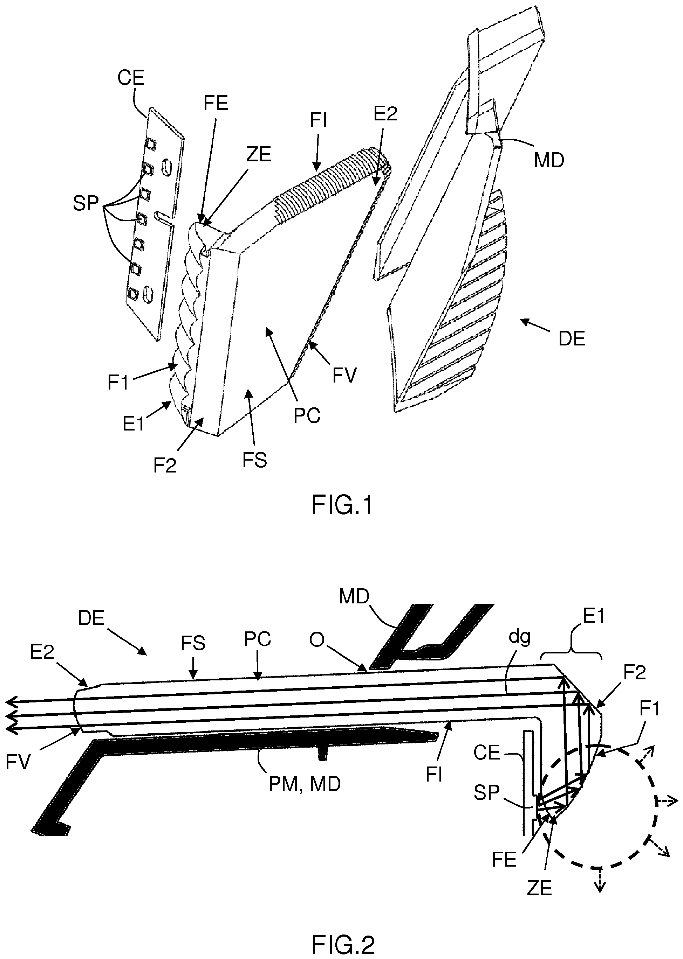

Comme illustré sur les figures 1 à 3, un dispositif d'éclairage DE, selon l'invention, comprend au moins un guide de lumière GL associé à au moins une source de photons SP.

On notera que dans l'exemple illustré non limitativement sur les figures 1 à 3 le dispositif d'éclairage DE comprend un seul guide de lumière GL associé à plusieurs sources de photons SP. En fait, comme cela apparaît sur la figure 1, le dispositif d'éclairage DE comprend sept sources de photons SP alimentant respectivement sept sous parties d'une zone d'entrée ZE du guide de lumière GL. Mais le nombre de guides de lumière GL peut prendre n'importe quelle valeur supérieure ou égale à un (1), et le nombre de sources de photons SP associé à chaque guide de lumière GL peut prendre n'importe quelle valeur supérieure ou égale à un (1).

On notera également que dans l'exemple illustré non limitativement sur les figures 1 à 3, les sources de photons SP sont installées sur une carte électronique CE avec des moyens de contrôle chargés de contrôler leur fonctionnement. Cette carte électronique CE peut, par exemple, être une carte à circuits imprimés de type PCB (« Printed Circuit Board »). Mais la/chaque source de photons SP pourrait être installée sur un simple support.

La/chaque source de photons SP peut, par exemple, comprendre au moins une diode électroluminescente (ou LED) ou au moins une diode laser ou encore au moins une ampoule.

Le/chaque guide de lumière GL comprend une partie centrale PC située entre une extrémité arrière E1 et une extrémité avant E2. On comprendra que cette partie centrale PC est prolongée de part et d'autre par les extrémités arrière E1 et avant E2, et est dédiée au guidage des photons depuis l'extrémité arrière E1 jusqu'à l'extrémité avant E2.

Les notions d'avant et d'arrière doivent ici se comprendre par rapport au sens de propagation des photons dans le guide de lumière GL depuis une source de photons SP jusqu'à la face avant FV de l'extrémité avant E2 du guide de lumière GL.

L'extrémité arrière E1 comporte une zone d'entrée ZE qui est alimentée en photons par au moins une source de photons SP. Elle comprend une zone d'entrée ZE qui est située à un niveau espacé d'un autre niveau où est située la partie centrale PC. De plus, cette extrémité arrière E1 présente une forme et une surface externe qui induisent au moins deux réflexions totales internes des photons qui ont pénétré par la zone d'entrée ZE afin qu'ils parviennent dans la partie centrale PC avec une direction générale dg prédéfinie. Cette direction générale dg est sensiblement parallèle à l'axe longitudinal de la partie centrale PC du guide de lumière GL, lorsque ce dernier (GL) est de type plat (ou flat guide), éventuellement à section rectangulaire.

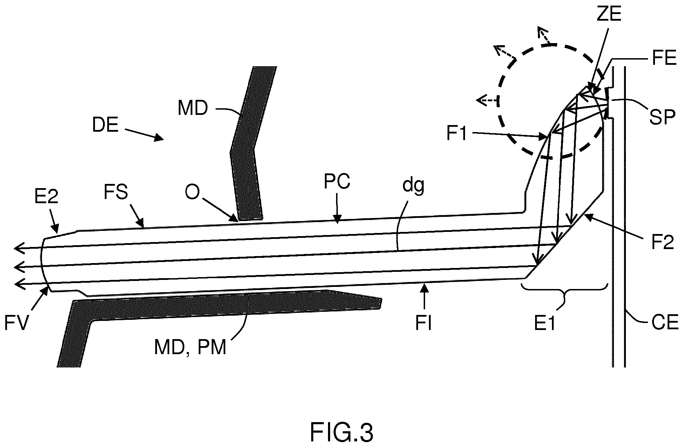

On notera que dans les deux exemples illustrés non limitativement sur les figures 2 et 3 la forme et la surface externe de chaque extrémité arrière E1 n'induit que deux réflexions totales internes des photons. Mais la forme et la surface externe de chaque extrémité arrière E1 pourrait induire plus de deux réflexions totales internes des photons, et par exemple trois.

L'extrémité avant E2 comporte une face avant FV qui délivre des photons guidés par la partie centrale PC et issus de l'extrémité arrière E1.

Grâce à ce décalage de niveau de la zone d'entrée ZE des photons par rapport au niveau de la partie centrale PC, et aux réflexions totales internes des photons permettant de rattraper ce décalage, on peut réduire notablement la longueur du guide de lumière (suivant son axe longitudinal) car on ne risque plus d'apercevoir des points chauds (correspondant à chaque source de photons SP) dans l'axe longitudinal de la partie centrale PC. Cela permet donc de réduire notablement l'encombrement du dispositif d'éclairage DE.

Comme illustré sur les figures 1 à 3, la forme de l'extrémité arrière E1 peut être définie par au moins une première face F1 orientée vers la zone d'entrée ZE et la source de photons SP, et une seconde face F2, distante de la première face F1 et orientée vers la partie centrale PC en faisant un angle prédéfini par rapport à la direction générale dg prédéfinie. On comprendra que la première face F1 assure la première réflexion des photons qui sont entrés par la face d'entrée FE de la zone d'entrée ZE, et la seconde face F2 assure la seconde réflexion des photons (qui ont été réfléchis par la première face F1) vers la partie centrale PC et suivant la direction générale dg prédéfinie. Par exemple, cet angle prédéfini peut être compris entre 30° et 60°, mais sa valeur dépend principalement de la direction d'arrivée des photons sur la seconde face F2, de la direction générale dg souhaitée, et de l'indice de réfraction du matériau dans lequel est réalisé le guide de lumière GL.

Les première F1 et seconde F2 faces, qui participent aux réflexions totales internes, peuvent présenter différentes formes, plus ou moins complexes, selon les besoins. Ainsi, elles peuvent être éventuellement en forme de parabole ou de dioptre.

On notera que la surface externe de l'une au moins des première F1 et seconde F2 faces peut être agencée de manière à réfléchir les photons selon plusieurs directions différentes afin d'obtenir une répartition homogène des photons guidés sur la face avant FV de l'extrémité avant E2.

On notera également que chaque face F1 ou F2 concernée peut comprendre sur sa surface externe un traitement de surface et/ou des facettes et/ou des éléments tridimensionnels induisant des réflexions internes suivant plusieurs directions privilégiées. Le traitement de surface peut, par exemple, consister en un dépôt d'un revêtement réfléchissant sur la surface externe. Les éléments tridimensionnels peuvent, par exemple, être des prismes, des dioptres, des stries ou rainures, des nervures ou des micro-plots.

Au moins deux agencements relatifs différents peuvent être envisagés pour les principaux éléments GL et SP du dispositif d'éclairage DE.

Un premier agencement est illustré sur les figures 1 et 2. Il consiste à placer, d'une part, la zone d'entrée ZE sur une face d'entrée FE de l'extrémité arrière E1 qui participe à la définition de la forme de cette dernière (E1) et qui est orientée vers la partie centrale PC, et, d'autre part, la source de photons SP entre les extrémités arrière E1 et avant E2. Un avantage de ce premier agencement réside dans le fait que chaque source de photons SP émet ses photons dans un demi espace orienté vers l'arrière (à l'opposé de la face avant FV), ce qui limite notablement la probabilité que les photons parasites (non entrés dans la zone d'entrée ZE) se dirigent vers l'extrémité avant E2. De plus ce premier agencement permet de réduire légèrement l'encombrement longitudinal du dispositif d'éclairage DE.

Un second agencement est illustré sur la figure 3. Il consiste à placer, d'une part, la zone d'entrée ZE sur une face d'entrée FE de l'extrémité arrière E1 qui participe à la définition de la forme de cette dernière (E1) et qui est orientée à l'opposé de la partie centrale PC, et, d'autre part, la source de photons SP en amont de l'extrémité arrière E1. Ce second agencement permet de réduire légèrement l'encombrement vertical du dispositif d'éclairage DE.

On notera également, comme illustré sur les figures 1 à 3, que le dispositif d'éclairage DE peut comprendre un masque MD comportant au moins une ouverture O traversée par la partie centrale PC, et masquant l'extrémité arrière E1, la source de photons SP et une partie au moins de la partie centrale PC. Ce masque MD permet également d'intercepter d'éventuels photons parasites issus d'une source de photons SP, n'étant pas entrés dans la zone d'entrée ZE et se dirigeant vers l'avant.

Dans l'exemple illustré non limitativement sur les figures 1 à 3, le masque MD ne comprend qu'une seule ouverture O du fait que son dispositif d'éclairage DE ne comprend qu'un seul guide de lumière GL. Mais le nombre d'ouvertures O est égal au nombre de guides de lumière GL.

Par ailleurs, et comme illustré non limitativement sur les figures 1 à 3, selon l'invention le masque MD comprend une partie PM installée parallèlement à et sous la face inférieure FI de la partie centrale PC au moins en aval de l'ouverture O, et une partie de la face supérieure FS de la partie centrale PC, située en aval de l'ouverture O, est apparente. Cette partie PM peut alors éventuellement supporter partiellement le guide de lumière GL. Un tel agencement, rendant visible une partie de la partie centrale PC du guide de lumière GL, peut permettre d'obtenir un effet de style ou bien de renvoyer la lumière suivant certaines directions afin de respecter des caractéristiques réglementaires de la fonction photométrique. Notamment, on peut, par exemple, faire des décorations sur la partie découverte de la partie centrale PC sans dégrader l'aspect allumé.

On notera également que chaque guide de lumière GL peut, par exemple, être réalisé par moulage d'une matière telle que le polycarbonate (ou PC) ou le poly-méthacrylate de méthyle (ou PMMA).

On notera également que lorsque le dispositif d'éclairage DE constitue un bloc optique, il comporte en complément un boîtier et un éventuel écran translucide qui délimitent une cavité interne logeant chaque guide de lumière GL, chaque source de photons SP (et l'éventuelle carte électronique CE), et l'éventuel masque MD. Un tel boîtier peut alors être réalisé par moulage d'un matériau opaque et rigide, comme par exemple une matière plastique ou synthétique. L'éventuel écran translucide est placé devant (ou en aval de) la face avant FV de chaque guide de lumière GL, et peut être réalisé dans un matériau translucide, ayant une couleur adaptée à la fonction photométrique à assurer (par exemple rouge, orange, ou cristal), et rigide, comme par exemple une matière plastique ou synthétique. Dans ce cas, il peut être réalisé par moulage.

## Revendications

1. Dispositif d'éclairage (DE) pour un véhicule, ledit dispositif (DE) comprenant au moins un guide de lumière (GL) comprenant une partie centrale (PC) située entre une extrémité arrière (E1) comportant une zone d'entrée (ZE) alimentée en photons par au moins une source de photons (SP), et une extrémité avant (E2) comportant une face avant (FV) délivrant des photons guidés par ladite partie centrale (PC), dans lequel ladite extrémité arrière (E1) comprend une zone d'entrée (ZE) située à un niveau espacé d'un autre niveau où est située ladite partie centrale (PC) et présente une forme et une surface externe induisant au moins deux réflexions totales internes desdits photons ayant pénétré par ladite zone d'entrée (ZE) afin qu'ils parviennent dans ladite partie centrale (PC) avec une direction générale prédéfinie, le dispositif étant tel qu' il comprend un masque (MD) comprenant au moins une ouverture (O) traversée par ladite partie centrale (PC) et masquant ladite extrémité arrière (E1), ladite source de photons (SP) et une partie au moins de ladite partie centrale (PC), **caractérisé en ce que** ledit masque (MD) comprend en outre une partie (PM) installée parallèlement à et sous une face inférieure (FI) de ladite partie centrale (PC) au moins en aval de ladite ouverture (O) ; une partie d'une face supérieure (FS) de ladite partie centrale (PC), située en aval de ladite ouverture (O), étant apparente.

2. Dispositif selon la revendication 1, **caractérisé en ce que** ladite forme est définie par au moins une première face (F1) orientée vers ladite zone d'entrée (ZE) et ladite source de photons (SP), et une seconde face (F2) orientée vers ladite partie centrale (PC) en faisant un angle prédéfini par rapport à ladite direction générale prédéfinie.

3. Dispositif selon la revendication 2, **caractérisé en ce que** ladite surface externe de l'une au moins desdites première (F1) et seconde (F2) faces est agencée de manière à réfléchir lesdits photons selon plusieurs directions différentes afin d'obtenir une répartition homogène desdits photons guidés sur ladite face avant (FV) de l'extrémité avant (E2).

4. Dispositif selon l'une des revendications 1 à 3, **caractérisé en ce que** ladite zone d'entrée (ZE) est située sur une face d'entrée (FE) participant à la définition de ladite forme et orientée vers ladite partie centrale (PC), et ladite source de photons (SP) est placée entre lesdites extrémités arrière (E1) et avant (E2).

5. Dispositif selon l'une des revendications 1 à 3, **caractérisé en ce que** ladite zone d'entrée (ZE) est située sur une face d'entrée (FE) participant à la définition de ladite forme et orientée à l'opposé de ladite partie centrale (PC), et ladite source de photons (SP) est placée en amont de ladite extrémité arrière (E1).

6. Dispositif selon l'une des revendications 1 à 5, **caractérisé en ce que** ledit guide de lumière (GL) est de type plat.

7. Bloc optique pour un véhicule, ledit bloc optique comprenant un boîtier délimitant une cavité, **caractérisé en ce que** ladite cavité loge au moins un dispositif d'éclairage (DE) selon l'une des revendications précédentes.

8. Véhicule, **caractérisé en ce qu'**il comprend au moins un dispositif d'éclairage (DE) selon l'une des revendications 1 à 6 et/ou au moins un bloc optique selon la revendication 7.

## Patentansprüche

1. Beleuchtungsvorrichtung (DE) für ein Fahrzeug, wobei die Vorrichtung (DE) mindestens einen Lichtleiter (GL) mit einem Mittelteil (PC) umfasst, der sich zwischen einem hinteren Ende (E1) mit einem Eingangsbereich (ZE), der von mindestens einer Photonenquelle (SP) mit Photonen versorgt wird, und einem vorderen Ende (E2) mit einer Vorderseite (FV) befindet, die von dem Mittelteil (PC) geleitete Photonen abgibt, wobei das hintere Ende (E1) einen Eingangsbereich (ZE) umfasst, der sich auf einer Ebene befindet, die von einer anderen Ebene, auf der sich der Mittelteil (PC) befindet, beabstandet ist, und eine Form und eine äußere Oberfläche aufweist, die mindestens zwei innere Totalreflexionen der Photonen, die durch den Eingangsbereich (ZE) eingedrungen sind, induziert, so dass sie in den Mittelteil (PC) mit einer vordefinierten allgemeinen Richtung gelangen , wobei die Vorrichtung so beschaffen ist, dass sie eine Maske (MD) mit mindestens einer Öffnung (O) umfasst, die von dem zentralen Teil (PC) durchquert wird und das hintere Ende (E1), die Photonenquelle (SP) und mindestens einen Teil des zentralen Teils (PC) verdeckt, **dadurch gekennzeichnet, dass** die Maske (MD) ferner einen Teil (PM) umfasst, der parallel zu und unter einer Unterseite (FI) des zentralen Teils (PC) mindestens stromabwärts von der Öffnung (O) installiert ist; wobei ein Teil einer Oberseite (FS) des Mittelteils (PC), der sich stromabwärts der Öffnung (O) befindet, freiliegt.

2. Vorrichtung nach Anspruch 1, **dadurch gekennzeichnet, dass** die Form durch mindestens eine erste Seite (F1), die in Richtung des Eingangsbereichs (ZE) und der Photonenquelle (SP) gerichtet ist, und eine zweite Seite (F2), die in Richtung des Mittelteils (PC) unter einem vordefinierten Winkel zu der vordefinierten allgemeinen Richtung gerichtet ist, definiert ist.

3. Vorrichtung nach Anspruch 2, **dadurch gekennzeichnet, dass** die Außenfläche von mindestens einer der ersten (F1) und zweiten (F2) Seiten so angeordnet ist, dass sie die Photonen in mehrere verschiedene Richtungen reflektiert, um eine homogene Verteilung der geführten Photonen auf der Vorderseite (FV) des vorderen Endes (E2) zu erhalten.

4. Vorrichtung nach einem der Ansprüche 1 bis 3, **dadurch gekennzeichnet, dass** sich der Eingangsbereich (ZE) auf einer Eingangsfläche (FE) befindet, die an der Definition der Form teilnimmt und zum Mittelteil (PC) hin ausgerichtet ist, und die Photonenquelle (SP) zwischen dem hinteren Ende (E1) und dem vorderen Ende (E2) angeordnet ist.

5. Vorrichtung nach einem der Ansprüche 1 bis 3, **dadurch gekennzeichnet, dass** sich der Eingangsbereich (ZE) auf einer Eingangsfläche (FE) befindet, die an der Definition der Form beteiligt und vom Mittelteil (PC) weg gerichtet ist, und die Photonenquelle (SP) vor dem hinteren Ende (E1) angeordnet ist.

6. Vorrichtung nach einem der Ansprüche 1 bis 5, **dadurch gekennzeichnet, dass** der Lichtleiter (GL) vom flachen Typ ist.

7. Optische Einheit für ein Fahrzeug, wobei die optische Einheit ein Gehäuse umfasst, das einen Hohlraum begrenzt, **dadurch gekennzeichnet, dass** der Hohlraum mindestens eine Beleuchtungsvorrichtung (DE) nach einem der vorhergehenden Ansprüche aufnimmt.

8. Fahrzeug, **dadurch gekennzeichnet, dass** es mindestens eine Beleuchtungsvorrichtung (DE) nach einem der Ansprüche 1 bis 6 und/oder mindestens eine optische Einheit nach Anspruch 7 umfasst.

## Claims

1. An illumination device (DE) for a vehicle, said device (DE) comprising at least one light guide (GL) comprising a central portion (PC) located between a rear end (E1) having an input region (ZE) supplied with photons by at least one photon source (SP), and a front end (E2) having a front face (FV) delivering photons guided by said central portion (PC) wherein said rear end (E1) comprises an entrance zone (ZE) located at a level spaced from another level where said central portion (PC) is located and has a shape and an outer surface inducing at least two total internal reflections of said photons having penetrated through said entrance zone (ZE) so as to arrive in said central portion (PC) with a predefined general direction , the device being such that it comprises a mask (MD) comprising at least one opening (O) through which said central part (PC) passes and masking said rear end (E1), said photon source (SP) and at least part of said central part (PC), **characterized in that** said mask (MD) further comprises a part (PM) installed parallel to and under a lower face (FI) of said central part (PC) at least downstream of said opening (O); a portion of an upper face (FS) of said central portion (PC), located downstream of said opening (O), being exposed.

2. Device according to claim 1, **characterized in that** said shape is defined by at least a first face (F1) oriented towards said entrance area (ZE) and said photon source (SP), and a second face (F2) oriented towards said central portion (PC) at a predefined angle to said predefined general direction.

3. Device according to claim 2, **characterized in that** said external surface of at least one of said first (F1) and second (F2) faces is arranged to reflect said photons along several different directions in order to obtain a homogeneous distribution of said guided photons on said front face (FV) of the front end (E2).

4. Device according to one of claims 1 to 3, **characterized in that** said input zone (ZE) is located on an input face (FE) participating in the definition of said shape and oriented towards said central part (PC), and said photon source (SP) is placed between said rear (E1) and front (E2) ends.

5. Device according to one of claims 1 to 3, **characterized in that** said input zone (ZE) is located on an input face (FE) participating in the definition of said shape and oriented away from said central portion (PC), and said photon source (SP) is placed upstream of said rear end (E1).

6. Device according to one of claims 1 to 5, **characterized in that** said light guide (GL) is of flat type.

7. Optical block for a vehicle, said optical block comprising a housing delimiting a cavity, **characterized in that** said cavity houses at least one lighting device (DE) according to one of the preceding claims.

8. Vehicle, **characterized in that** it comprises at least one lighting device (DE) according to one of claims 1 to 6 and/or at least one optical block according to claim 7.
